# EUROPEAN PATENT SPECIFICATION

(11) **EP 3 905 543 B1**
(45) Date of publication and mention of the grant of the patent: **28.10.2026**
(21) Application number: 19901934.0
(22) Date of filing: 05.07.2019
(51) Int. Cl.: H04B 17/13, H04B 17/17

(54) **POWER ADJUSTMENT METHOD AND DEVICE, ARRAY ANTENNA AND STORAGE MEDIUM**
LEISTUNGSANPASSUNGSVERFAHREN UND -VORRICHTUNG, GRUPPENANTENNE UND SPEICHERMEDIUM
PROCÉDÉ ET DISPOSITIF DE RÉGLAGE DE PUISSANCE, ANTENNE RÉSEAU ET SUPPORT D'INFORMATIONS

(30) Priority: 29.12.2018 CN 201811648135
(43) Date of publication of application: 03.11.2021
(73) Proprietor: ZTE Corporation, Shenzhen Guangdong 518057 (CN)
(72) Inventor: LIU, Hang, Shenzhen, Guangdong 518057 (CN)
(74) Representative: Canzler & Bergmeier Patentanwälte Partnerschaft mbB
(86) International application number: PCT/CN2019/094881
(87) International publication number: WO 2020/134013

(56) References cited:
- CN-A- 103 050 788
- CN-A- 106 803 774
- CN-A- 109 088 679
- US-A1- 2010 166 098
- US-A1- 2017 310 004

## Description

### TECHNICAL FIELD

The present application relates to the field of communications, and particularly relates to a power adjustment method and device, an array antenna and a storage medium.

### BACKGROUND

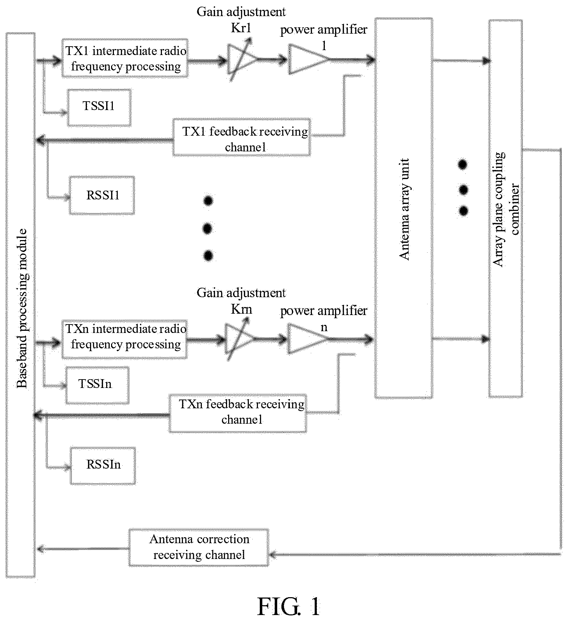

In the related art, an Active Antenna Unit (AAU) of a base station of the fifth generation mobile communication network (5G) completes power scaling and dynamic power control of the transmitting channel by designing an independent feedback coupling channel (equivalent to the TX1 feedback receiving channel in FIG 1) for each transmitting channel in hardware. A hardware architecture block diagram thereof is as shown in FIG 1. Typically, the feedback coupling channel completes power detection of the transmitting channel, data acquisition for gain control and data acquisition for digital predistortion processing in a time division multiplexing mode. For the array antenna channel design, each transmitting channel requires a corresponding feedback coupling channel to complete transmitting power control of the channel inside AAU, which increases the hardware volume, as well as the wiring difficulty and cost.

No effective technical solution has been proposed yet regarding the problems of large hardware volume and high wiring cost in the related art caused by each transmitting channel in AAU requiring a corresponding feedback coupling channel.

### SUMMARY

The present invention is defined by the appended independent claims. Specific embodiments are defined in the dependent claims.

### BRIEF DESCRIPTION OF THE DRAWINGS

The accompanying drawings, which are included to provide further understanding of the application and are incorporated in and constitute a part of the present application, illustrate embodiment(s) of the application and together with the description serve to explain the application and not to limit the application. In the drawings:
FIG 1 is a block diagram illustrating hardware architecture of an array antenna AAU in the related art;
FIG 2 is a structure block diagram of an array antenna according to the present application;
FIG 3 is a schematic flowchart of a power adjustment method according to the present application;
FIG 4 is a schematic diagram illustrating power control hardware for the transmitting channel according to the present application;
FIG 5 is a schematic diagram illustrating hardware of a multi-stage combiner unit for TX1 array plane channels according to the present application;
FIG 6 is a schematic diagram illustrating a coupling combiner for TX1 array plane antennas according to the present application;
FIG 7 is a structure block diagram of a power adjustment device according to the present application;
FIG 8 is a schematic diagram of an antenna correction receiving channel according to the present application;
FIG 9 is a schematic flowchart of closed-loop power control according to the present application;
FIG 10 is a schematic diagram illustrating positions of element gain adjustment (Ka) on an antenna array plane according to the present application;
FIG 11 is a schematic flowchart of open-loop power control according to the present application;
FIG 12 is a schematic diagram of feedback coupling points of the transmitting channel according to the present application; and
FIG 13 is a schematic diagram of a sub-antenna array plane according to the present application.

### DETAILED DESCRIPTION

The present application will be described in detail below with reference to the accompanying drawings in conjunction with embodiments. It should be noted that embodiments of the present application and features therein may be combined with each other in any manner as long as they are not contradictory.

It should be also noted that terms "first", "second", and the like in the description, claims and drawings of the embodiments of the present application are used for the purpose of distinguishing similar objects instead of indicating a specific order or sequence.

For a high frequency AAU, the contribution of Digital Pre-Distortion (DPD) to the radio frequency index is not high, and if the feedback channel design is cancelled, power control of the transmitting channel needs to be adjusted using a conventional open-loop lookup table. However, such a method has some disadvantages, including that: 1) a gain characteristic of a full-frequency transmitting channel needs to be obtained from tests of a small amount of AAU samples, and the discreteness problem in batch production is difficult to control; and 2) after AAU has operated for a long time, the gain characteristic of the transmitting channel therein changes and no effective means is available for detection and intervention. The above two defects will cause an excessive power deviation, which then causes a reduced forming index of the antenna beam. However, each transmitting channel of the AAU requires a corresponding feedback coupling channel, resulting in a large hardware volume and high wiring cost. In view of these problems, the following technical solution is provided in the present application.

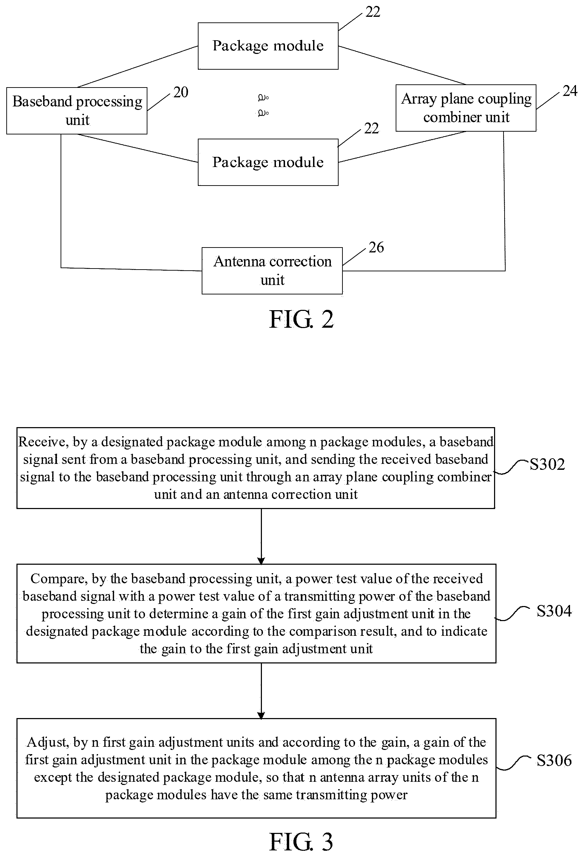

The present application provides an array antenna. FIG 2 is a structure block diagram of an array antenna according to the present application. As shown in FIG 2, the array antenna includes: a baseband processing unit 20, n package modules 22, an array plane coupling combiner unit 24 and an antenna correction unit 26. Each of the n package modules 22 includes: a first gain adjustment unit, and an antenna array unit connected to the first gain adjustment unit. A designated package module among the n package modules is connected to the baseband processing unit and the array plane coupling combiner unit, and is configured to, after receiving a baseband signal sent from the baseband processing unit, send the received baseband signal to the baseband processing unit through the array plane coupling combiner unit and the antenna correction unit, where n is a positive integer.

The baseband processing unit 20 is configured to compare a power test value of the received baseband signal with a power test value of a transmitting power of the baseband processing unit to determine a gain of the first gain adjustment unit in the designated package module according to the comparison result, and to indicate the gain to the first gain adjustment unit. n first gain adjustment units are configured to adjust, according to the gain, a gain of the first gain adjustment unit in the package module among the n package modules except the designated package module, so that n antenna array units of the n package modules have the same transmitting power.

With the array antenna provided in the present application, the problems of large hardware volume and high wiring cost in the related art caused by each transmitting channel in AAU requiring a corresponding feedback coupling channel are solved, and thus, only one feedback coupling channel is required so that an area of the hardware circuit and the design complexity are both reduced.

In the present application, the n first gain adjustment units are further configured to adjust, by the first gain adjustment unit of the designated package module, a gain of the antenna array unit corresponding to the first gain adjustment unit, and receive, by other first gain adjustment unit, a first gain difference value written by the baseband processing unit, and adjust a transmitting power of the antenna array unit corresponding to the other first gain adjustment unit according to the first gain difference value so that the antenna array units of the n package modules have the same transmitting power. The other first gain adjustment unit refers to a first gain adjustment unit among the n first gain adjustment units except the first gain adjustment unit in the designated package module, and the first gain difference value refers to a difference value between the gain of the first gain adjustment unit in the designated package module and the gain of the other first gain adjustment unit.

In the present application, each of the package modules further includes: m second gain adjustment units, and a multi-stage combiner unit which is connected to the m second gain adjustment units. The multi-stage combiner unit is configured to receive the baseband signal, split the baseband signal into m paths of signals, and send the m paths of signals to the antenna array unit through the m second gain adjustment units.

The antenna array unit is configured to send a k^{th} path of signal among the received m paths of signals, via a coupling element or an antenna feed line of the antenna array unit, to the baseband processing unit through the array plane coupling combiner unit and the antenna correction unit. The k^{th} path of signal corresponds to a k^{th} second gain adjustment unit among the m second gain adjustment units.

The baseband processing unit 20 is configured to compare a power test value of the received k^{th} path of signal with the power test value of the transmitting power of the baseband processing unit, to determine a gain of the k^{th} path of signal according to the comparison result, and to indicate the gain of the k^{th} path of signal to the m second gain adjustment unit.

The m second gain adjustment units are configured to adjust gains of the m paths of signals according to the gain of the k^{th} path of signal so that the m paths of signals have the same gain, where k is a positive integer and is smaller than or equal to m.

In the present application, the m second gain adjustment units are further configured to adjust the gain of the k^{th} path of signal by the k^{th} second gain adjustment unit, and receive, by other second gain adjustment unit, a second gain difference value written by the baseband processing unit, and adjust a gain of the signal corresponding to the other second gain adjustment unit according to the second gain difference value so that the m paths of signals have the same gain. The other second gain adjustment unit refers to a second gain adjustment unit among the m second gain adjustment units except the second gain adjustment unit corresponding to the k^{th} path of signal, and the second gain difference value refers to a difference value between the gain of the second gain adjustment unit corresponding to the k^{th} path of signal and the gain of the other second gain adjustment unit.

In the present application, the baseband processing unit 20 is further configured to set an adjustable gain of the first gain adjustment unit according to at least the following equation: G_{txad} = Gₜₓₜₐᵣ - (Gₜₓ + Gₜₓₜₑₘₚ)
where G_{txad} is the adjustable gain, Gₜₓₜₐᵣ is a target gain for a transmitting channel between the baseband processing unit and the antenna array unit, Gₜₓ is a test gain for the transmitting channel, and Gₜₓₜₑₘₚ is a gain deviation value of a temperature difference between a current temperature and a normal temperature.

Based on the foregoing array antenna, the present application further provides a power adjustment method. FIG 3 is a schematic flowchart of a power adjustment method according to the present application. As shown in FIG 3, the flow includes the following steps S302 to S306.

At step S302, receiving, by a designated package module among n package modules, a baseband signal sent from a baseband processing unit, and sending the received baseband signal to the baseband processing unit through an array plane coupling combiner unit and an antenna correction unit, where n is a positive integer. The baseband processing unit, the n package modules connected to the baseband processing unit, the array plane coupling combiner unit connected to each of the n package modules, and the antenna correction unit connected to the array plane coupling combiner unit are located in the array antenna, and each of the n package modules includes: a first gain adjustment unit, and an antenna array unit connected to the first gain adjustment unit.

At step S304, comparing, by the baseband processing unit, a power test value of the received baseband signal with a power test value of a transmitting power of the baseband processing unit to determine a gain of the first gain adjustment unit in the designated package module according to the comparison result, and to indicate the gain to the first gain adjustment unit.

At step S306, adjusting, by n first gain adjustment units and according to the gain, a gain of the first gain adjustment unit in the package module among the n package modules except the designated package module, so that n antenna array units of the n package modules have the same transmitting power.

Through the embodiments of the present application, the problems of large hardware volume and high wiring cost in the related art caused by each transmitting channel in AAU requiring a corresponding feedback coupling channel are solved, and only one feedback coupling channel is required so that an area of the hardware circuit and the design complexity are both reduced.

In the present application, the step of adjusting, by the n first gain adjustment units and according to the gain, the gain of the first gain adjustment unit in the package module among the n package modules except the designated package module, so that the n antenna array units of the n package modules have the same transmitting power includes: adjusting, by the first gain adjustment unit of the designated package module, a gain of the antenna array unit corresponding to the first gain adjustment unit; and receiving, by other first gain adjustment unit, a first gain difference value written by the baseband processing unit, and adjusting a transmitting power of the antenna array unit corresponding to the other first gain adjustment unit according to the first gain difference value so that the antenna array units of the n package modules have the same transmitting power. The other first gain adjustment unit refers to a first gain adjustment unit among the n first gain adjustment units except the first gain adjustment unit in the designated package module, and the first gain difference value refers to a difference value between the gain of the first gain adjustment unit in the designated package module and the gain of the other first gain adjustment unit.

In the present application, the step of receiving, by the designated package module among the n package modules, the baseband signal sent from the baseband processing unit, and sending the received baseband signal to the baseband processing unit through the array plane coupling combiner unit and the antenna correction unit includes: receiving, by a multi-stage combiner unit, the baseband signal, splitting the baseband signal into m paths of signals, and sending the m paths of signals to the antenna array unit through m second gain adjustment units. Each of the package modules further includes: the m second gain adjustment units, and the multi-stage combiner unit connected to the m second gain adjustment units. The antenna array unit is configured to send a k^{th} path of signal among the received m paths of signals, via a coupling element or an antenna feed line of the antenna array unit, to the baseband processing unit through the array plane coupling combiner unit and the antenna correction unit. The k^{th} path of signal corresponds to a k^{th} second gain adjustment unit among the m second gain adjustment units.

The method further includes: comparing, by the baseband processing unit, a power test value of the received k^{th} path of signal with the power test value of the transmitting power of the baseband processing unit, to determine a gain of the k^{th} path of signal according to the comparison result, and to indicate the gain of the k^{th} path of signal to the m second gain adjustment unit; and adjusting, by the m second gain adjustment units, gains of the m paths of signals according to the gain of the k^{th} path of signal so that the m paths of signals have the same gain, where k is a positive integer and is smaller than or equal to m.

In the present application, the step of adjusting, by the m second gain adjustment units, the gains of the m paths of signals according to the gain of the k^{th} path of signal so that the m paths of signals have the same gain includes: adjusting, by the k^{th} second gain adjustment unit, the gain of the k^{th} path of signal; and receiving, by other second gain adjustment unit, a second gain difference value written by the baseband processing unit, and adjusting a gain of the signal corresponding to the other second gain adjustment unit according to the second gain difference value so that the m paths of signals have the same gain. The other second gain adjustment unit refers to a second gain adjustment unit among the m second gain adjustment units except the second gain adjustment unit corresponding to the k^{th} path of signal, and the second gain difference value refers to a difference value between the gain of the second gain adjustment unit corresponding to the k^{th} path of signal and the gain of the other second gain adjustment unit.

In the present application, before the step of receiving, by the designated package module among the n package modules, the baseband signal sent from the baseband processing unit, the method further includes: setting, by the baseband processing unit, an adjustable gain of the first gain adjustment unit according to at least the following equation: G_{txad} = Gₜₓₜₐᵣ - (Gₜₓ + Gₜₓₜₑₘₚ)
where G_{txad} is the adjustable gain, Gₜₓₜₐᵣ is a target gain for a transmitting channel between the baseband processing unit and the antenna array unit, Gₜₓ is a test gain for the transmitting channel, and Gₜₓₜₑₘₚ is a gain deviation value of a temperature difference between a current temperature and a normal temperature.

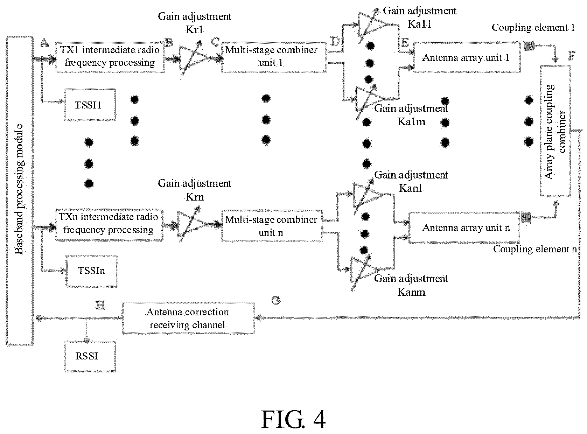

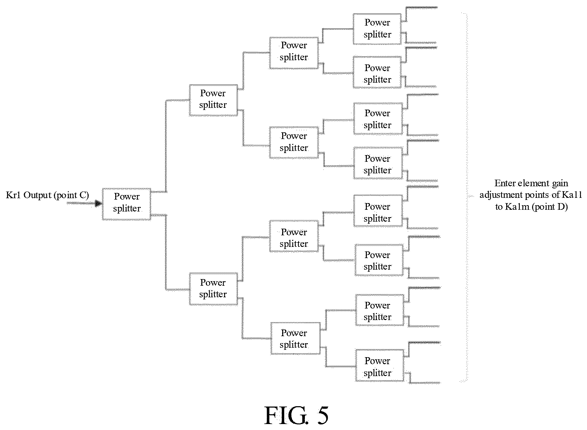

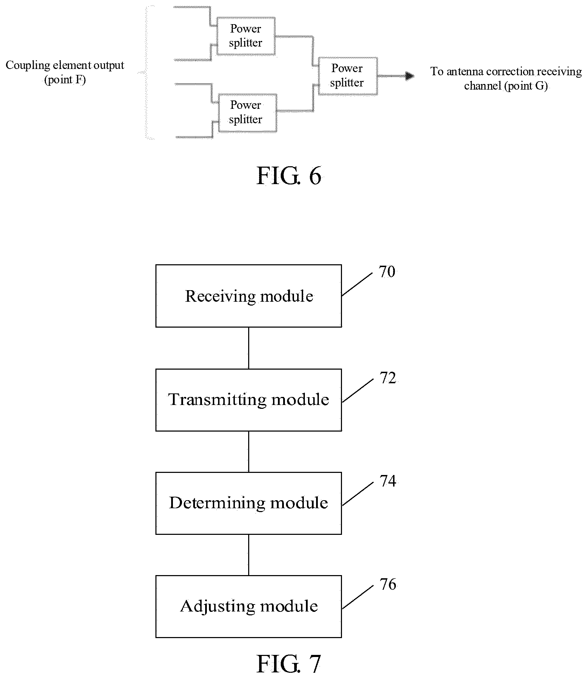

In summary, the embodiments of the present application provide a combined closed-loop and open-loop channel power control method and hardware device. The architecture is as shown in FIG 4, in which the baseband processing module outputs n paths of baseband signal that enter an intermediate radio frequency processing module. After the intermediate radio frequency conversion, the channel gain is adjusted through a numerical control attenuator (corresponding to gain adjustment points Kᵣ₁...Kᵣₙ in FIG 4). Then, the n paths of channel signals are split into n*m paths of channel signals via a multi-stage 2-in-1 combiner unit (shown in FIGs. 4 and 5), and finally sent to m feed sources on n antenna array planes. A schematic diagram of a single antenna array plane is as shown in FIG 6. Each feed source is split into 2 antenna elements so that the hardware system can realize n*2*m antenna elements and gain control is required on n*m channels. In order to reduce the area and the design complexity of the hardware circuit, a hardware design of a feedback channel is canceled on a radio frequency front end.

Through the description of the above implementations, those skilled in the art can clearly understand that the method according to the above embodiment can be implemented by means of software plus a necessary general hardware platform, and of course, can be implemented by hardware, but in many cases, the former is preferred. Based on such understanding, the technical solutions provided in the embodiments of the present application essentially or, in other words, a part thereof contributing to the prior art, can be embodied in a form of a software product, wherein the software product is stored in a storage medium (such as an ROM/RAM, a disk, or an optical disc) and includes a number of instructions to make a terminal device (which may be a mobile phone, a computer, a server, or a network device, etc.) to execute the methods of the various embodiments of the present application.

In the present application, there is further provided a power adjustment device configured to implement the above embodiments and optional implementations. Details which have been explained will not be repeated here. As used herein, the term "module" may be a combination of software and/or hardware that can realize a preset function. The devices described in the following embodiments may be implemented in software, but hardware, or a combination of software and hardware, is also possible and contemplated.

Based on the above antenna array, the present application further provides a power adjustment device. FIG 7 is a structure block diagram of a power adjustment device according to the present application. As shown in FIG 7, the device includes: a receiving module 70, a transmitting module 72, a determining module 74 and an adjusting module 76.

The receiving module 70 is configured to receive, by a designated package module among n package modules, a baseband signal sent from a baseband processing unit.

The transmitting module 72 is configured to send the received baseband signal to the baseband processing unit through an array plane coupling combiner unit and an antenna correction unit, where n is a positive integer, the baseband processing unit, the n package modules connected to the baseband processing unit, the array plane coupling combiner unit connected to each of the n package modules, and the antenna correction unit connected to the array plane coupling combiner unit are located in the array antenna, and each of the n package modules includes: a first gain adjustment unit, and an antenna array unit connected to the first gain adjustment unit.

The determining module 74 is configured to compare, by the baseband processing unit, a power test value of the received baseband signal with a power test value of a transmitting power of the baseband processing unit to determine a gain of the first gain adjustment unit in the designated package module according to the comparison result, and to indicate the gain to the first gain adjustment unit.

The adjusting module 76 is configured to adjust, by n first gain adjustment units and according to the gain, a gain of the first gain adjustment unit in the package module among the n package modules except the designated package module, so that n antenna array units of the n package modules have the same transmitting power.

With the technical solutions provided in the embodiments of the present application, the problems of large hardware volume and high wiring cost in the related art caused by each transmitting channel in AAU requiring a corresponding feedback coupling channel are solved, and only one feedback coupling channel is required so that an area of the hardware circuit and the design complexity are both reduced.

In the present application, the receiving module 70 is further configured to receive the baseband signal by a multi-stage combiner unit; the transmitting module 72 is further configured to split the baseband signal into m paths of signals, and send the m paths of signals to the antenna array unit through m second gain adjustment units, each of the package modules further including: the m second gain adjustment units, and the multi-stage combiner unit connected to the m second gain adjustment units.

The transmitting module 72 is further configured to send a k^{th} path of signal among the received m paths of signals, via a coupling element or an antenna feed line of the antenna array unit, to the baseband processing unit through the array plane coupling combiner unit and the antenna correction unit, the k^{th} path of signal corresponds to a k^{th} second gain adjustment unit among the m second gain adjustment units.

The determining module 74 is further configured to compare, by the baseband processing unit, a power test value of the received k^{th} path of signal with the power test value of the transmitting power of the baseband processing unit, to determine a gain of the k^{th} path of signal according to the comparison result, and to indicate the gain of the k^{th} path of signal to the m second gain adjustment unit.

The adjusting module 76 is further configured to adjust, by the m second gain adjustment units, gains of the m paths of signals according to the gain of the k^{th} path of signal so that the m paths of signals have the same gain, where k is a positive integer and is smaller than or equal to m.

It should be noted that the technical solutions of the foregoing embodiments may be used in combination or alone, which is not limited in the embodiments of the present application.

The following describes the above technical solutions with reference to embodiments, but the technical solutions of the embodiments of the present application are not limited thereto.

### Optional Embodiment 1:

Current transmitting power carries out gain compensation on an AAU channel by pre-writing a table of two channel characteristics, i.e., the transmitting channel gain test and changes in the transmitting channel gain with temperature under high and low temperatures. After the AAU has been used for a period of time, gain correction will be impossible when the gain characteristic of the transmitting channel changes.

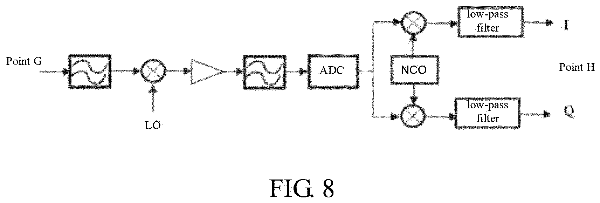

The present application utilizes the correction channel used in antenna correction as the feedback coupling channel of the transmitting channel to implement closed-loop power control, as shown in FIG 8.

For convenience of description, n channels are defined as antenna array plane channels, and m channels are defined as antenna element channels.

To form a feedback loop, one detection path may be coupled out from the 1st element position in n antenna array planes, and n paths of coupled signals are sent via the array plane coupling combiner unit to an antenna correction channel where a radio frequency signal is downconverted to the baseband. An antenna correction receiving channel is shown in FIG 8. The coupling element may be selected according to the actual situation, and only one of the coupling rules is set here. A power detection value of a Transmitted Signal Strength Indicator (TSSI) of the baseband of the transmitting channel is compared with a power detection value of Received Signal Strength Indication (RSSI) of the baseband coupled through the antenna correction receiving channel (the TSSI and RSSI detection points are as shown in FIG 4), and finally, a dynamic control of the transmitting power is performed.

In the present application, a method combining open-loop gain setting and closed-loop gain control is adopted, a gain of each subarray channel, i.e., the gain adjustment point Kᵣ₁ and the channel gain of each feed source in the subarray, is set in an open-loop mode, and closed-loop gain control of each subarray channel is completed in a time-sharing mode through a spontaneous test signal source.

In order to realize open-loop and closed-loop gain control, the following steps are required to be completed.

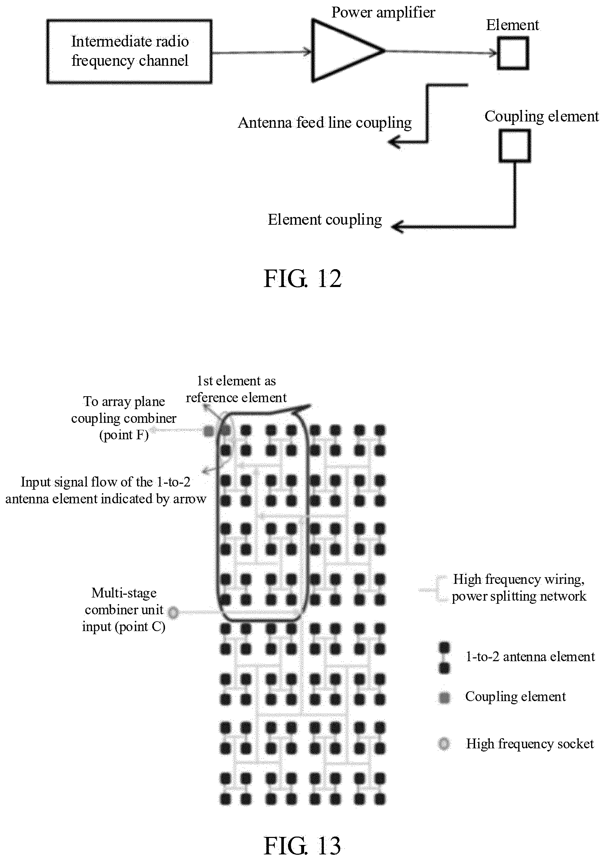

In FIG 4, with the adjustable gain points (Kr, Ka) of the transmitting channel to be tested not being attenuated as the reference, gains Gₜₓ₁, Gₜₓ₂... Gₜₓₙ from a baseband power detection point A of the channel in each transmitting channel link to the 1st antenna element position on each antenna array plane are obtained through testing and written into the AAU in the form of a table. With the 1st element on each antenna array plane as the reference (one rule for selecting the reference element is defined herein, but the set rule may be changed according to actual requirements), gains Gᵣₓ₁, Gᵣₓ₂ ... Gᵣₓₙ from the reference element to an RSSI position at a baseband power detection point H in the correction channel are obtained through testing, and written into the AAU in the form of a table. Gains G_{bf11}, G_{bf12} ... G_{bf1m}, G_{bf21}, G_{bf22}, ...G_{bf2m}, ...G_{bfnm} input from the multi-stage combiner unit at point C of each channel to each element of the antenna array (see FIG 13) are obtained through testing, and written into the AAU in the form of a table.

Temperature compensation characteristic compensation gains Gₜₓₜₑₘₚ₁, Gₜₓₜₑₘₚ₂ ... Gₜₓₜₑₘₚₙ from the baseband power detection point A in the downlink channel to the 1st antenna element position on each antenna array plane, and temperature compensation characteristic compensation gains Gᵣₓₜₑₘₚ₁, Gᵣₓₜₑₘₚ₂ ... Gᵣₓₜₑₘₚₙ from the coupling elements to the RSSI power detection position of point H through the array plane coupling combiner and the correction receiving channel, are obtained by testing.

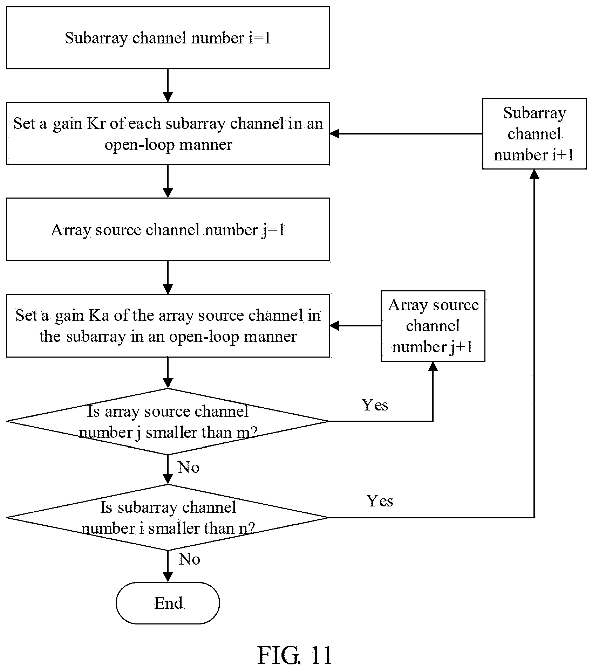

Each stage of gains on the transmitting channel link is set in an open-loop manner to enable a desired transmitting power of the antenna. The method includes the following steps:
1) Open-loop gain setting is performed on each array plane channel after AAU is started. A target gain of the transmitting channel is defined as a set theoretical desired gain from a TSSI power detection position to the antenna element position so that a gain value required to be set at an adjustable gain point Kr of the intermediate radio frequency channel can be calculated from the target gain of the transmitting channel, the actual test gain and the temperature compensation gain. In order to simplify the description, the channel number is not indicated in the equation, and each antenna array plane channel can be calculated according to the following equation: ${G}_{txad} = {G}_{txtar} - \left({G}_{tx}+{G}_{txtemp}\right)$ where G_{txad} is a set value of an adjustable gain Kr of the transmitting channel before the multi-stage combiner unit, Gₜₓₜₐᵣ is a target gain of the transmitting channel, Gₜₓ is a test gain of the array plane transmitting channel from a baseband to a reference antenna element, and Gₜₓₜₑₘₚ is a gain deviation value of the current temperature from the temperature of normal temperature test.
2) Gain compensation settings are provided on the link branched out from the multi-stage combiner unit to the antenna element channel so that it is ensured that power of elements on each antenna array plane is aligned with power of the 1st element on the 1st antenna array plane. A gain input from the multi-stage combiner unit to the antenna element is named G_{bf}. The specific method includes: firstly subtracting, from a gain G_{bf11} of the 1st element on the 1st array plane of the array antenna, gains G_{bf12} ... G_{bf1m} of other elements on the array plane, and writing the gain difference value into an element gain adjusting module between the multi-stage combiner unit of the array plane channel and the array antenna so that the gains among the elements on the array plane are consistent; and then subtracting, from the gain G_{bf11} of the 1st element on the 1st array plane of the array antenna, a gain G_{bf21}, G_{bf22} ... G_{bf2m} ... G_{bfnm} of an element on other array planes and writing the gain difference value into the element gain adjusting module between the multi-stage combiner unit of the array plane channel and the array antenna so that finally the gains of the elements among the array planes are consistent. The method for realizing consistency in power among the elements on various array planes may further include selecting one element on each array plane as the reference, aligning other elements on the array plane to the gain of the reference element, then selecting one array plane as a reference plane, and compensating a difference value between the gain of the reference element of other array plane and the gain of the reference element on the reference plane to the adjustable gain of the array plane channel. The flow of the open-loop setting of gains is as shown in FIG 11.

A mapping relationship between the baseband power detection values and the actual power values of the antenna elements in the forward and feedback links is obtained, and baseband TSSI power and RSSI power are detected to obtain the actual transmitting power of the corresponding element. The specific method includes the following steps:
1) An actual test gain from the reference antenna element on each antenna array plane to a baseband feedback power detection point H is obtained from a gain parameter Gᵣₓ prestored in AAU, a gain compensation value at the current temperature is obtained from a temperature compensation gain parameter Gᵣₓₜₑₘₚ prestored in AAU, and a gain of the power coupling channel of the current reference element is calculated. In order to simplify the description, the channel number is not indicated in the equation, and each antenna array plane channel can be calculated according to the following equation: G_{rxad} = Gᵣₓ + Gᵣₓₜₑₘₚ
   where G_{rxad} is a gain of the power coupling channel of the reference element at the current temperature, Gᵣₓ is an actual test gain of the power coupling channel, and Gᵣₓₜₑₘₚ is a temperature compensation value of the power coupling channel.

An element transmitting power RSSI(dBm) at the antenna port may be calculated from the gain of the coupling channel at the current temperature by equation: $RSSI \left(dBm\right) = RSSI \left(dBFS\right) + {G}_{rxad}$ where RSSI(dBFS) is a relative power value between a baseband digital power detection value and a baseband full scale.

A desired gain of the transmitting link is obtained from a relationship between a rated power of the element on the array plane and a rated power of the baseband, and an actual transmitting power at the element position may be calculated from the desired gain and the current TSSI baseband detection power by equation: $TSSI \left(dBm\right) = TSSI \left(dBFS\right) + {G}_{txexp}$ where TSSI(dBFS) is a relative power value between a baseband digital power detection value and a baseband full scale, and Gₜₓₑₓₚ is a desired gain from the baseband to the element in the transmitting link.

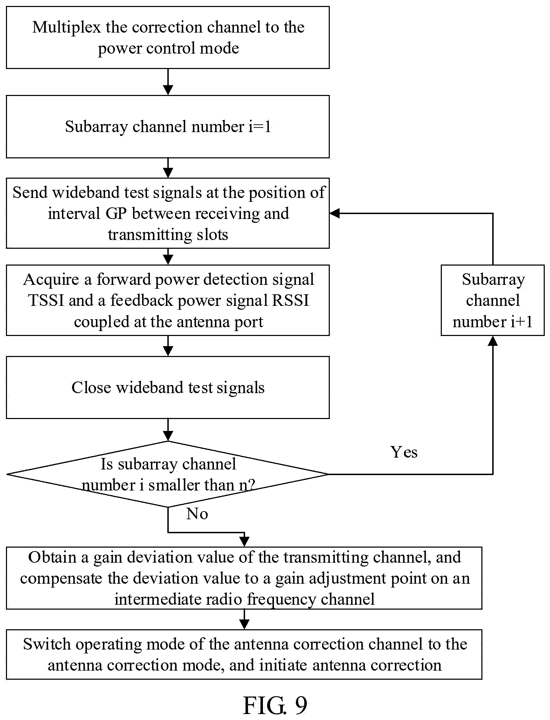

Time-sharing power control on power of the antenna channels in each subarray plane is performed in a closed-loop manner, and a baseband signal of the transmitting channel reaches elements on the antenna array plane via the transmitting channel. Each subarray antenna couples out signals through one of the reference elements, and the signals enter the baseband processing unit after passing through the combiner unit and the correction receiving channel. The gain of each array plane channel is adjusted by comparing the detection power TSSI of the forward baseband and the feedback detection power RSSI at the antenna port so that the transmitting power on the array plane is in consistence with the transmitting power of the baseband. Because n array plane channels multiplex one correction channel while the correction channel further needs to complete the antenna correction function, closed-loop power detection needs to be completed in turn at the position of a guard interval GP between receiving and transmitting slots in a data frame format. While the closed-loop power detection is performed on an array plane channel, other channels are in a waiting state. The closed-loop power detection of a single array plane channel includes two steps, i.e., transmitting a test signal and detecting TSSI and RSSI power, and gain adjustment of each channel is carried out after the closed-loop power detection of the array plane channel is finished. Since the antenna correction function is initiated at regular time, the acquisition of gains of the array plane channels and phase information are completed by using the antenna correction receiving channel in FIG 1 and by transmitting an AC sequence (antenna correction baseband data sequence) in the baseband of the transmitting channel at the position of interval GP between receiving and transmitting slots in the data frame format. Therefore, acquisition of the antenna correction data and acquisition of the closed-loop power detection data are conflicting, and channel resource occupation of the two operating modes of the correction channel are required to be scheduled in time. The specific operation steps of the closed-loop power control are as follows (the control flowchart is as shown in FIG 9):
1) Two operating modes are set for the antenna correction channel, i.e., a power control mode and an antenna correction mode. Software starts the power control mode and the antenna correction mode at regular time, and the two modes will not be triggered at the same time.
2) Firstly, the correction channel is multiplexed to the power control mode, in which a group of wideband test signals are sent on the 1st antenna array plane channel (i.e., a subarray channel number i=1) for gain measurement of the transmitting channel. The wideband test signals are sent at the position of interval GP between receiving and transmitting slots to avoid the influence of uplink and downlink service signals on detection of the test signals.
3) A forward power detection signal TSSI and a feedback power signal RSSI coupled at the antenna port are acquired, and then the wideband test signals are closed.
4) Test signals are sequentially sent to all array plane channels in the manner as described in step 2), and step 3) is repeated until data acquisition of all array plane channels is finished. In practical applications, it may determine whether the subarray channel number i is smaller than n, where n has a value equal to the number of array plane channels. When it is determined that the subarray channel number i is smaller than n, the subarray channel number i+1 is controlled, and steps 2) and 3) are repeated until it is determined that the subarray channel number i is not smaller than n.
5) A gain deviation value of the transmitting channel is obtained according to a power difference value between the forward power detection signal TSSI and the feedback signal RSSI of each channel, and the deviation value is compensated to a gain adjustment point on an intermediate radio frequency channel. For the determining method of the gain deviation value of the transmitting channel and the compensating method of the gain adjustment point, reference may be made to the previous embodiments, and details are not repeated here.
6) The operating mode of the antenna correction channel is switched to the antenna correction mode, and an antenna correction is initiated.

### Optional embodiment 2:

In order to solve the problems that the high frequency base station AAU has no feedback coupling channel, the transmitting power at the antenna port cannot be controlled in a closed-loop manner, and the transmitting power precision is not high, the present embodiment provides a method for implementing closed-loop power control by using an antenna correction receiving channel to meets the power control requirement. In this embodiment, AAU hardware including 4 antenna array plane channels, in which each antenna array plane includes 64 pairs of antenna elements, each pair consists of two antenna elements, and thus a total of 4*64*2=512 antenna elements are included, is given for the purpose of explaining the method.

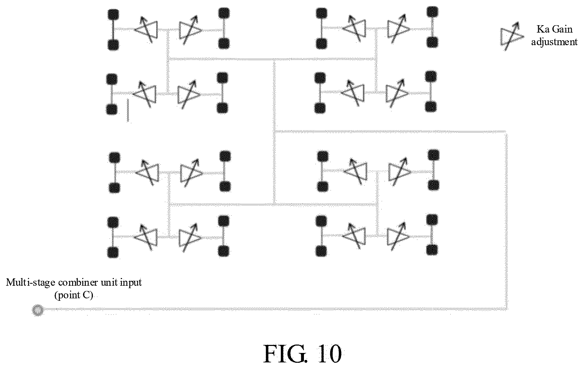

A baseband processing module outputs 4 paths of baseband signals, and detects power of the baseband data before it enters an intermediate radio frequency processing module, such as the TSSI power detection position shown in FIG 1. Power detection values of the 4 channels are named TSSI1, TSSI2, TSSI3, and TSSI4. After the intermediate radio frequency conversion of the 4 paths of channel signals, the channel gain is adjusted through a numerical control attenuator (corresponding to gain adjustment points Kᵣ₁... Kᵣ₄ in FIG 4). Then, the 4 paths of channel signals are split into 4*64 paths of channel signals via a multi-stage 2-in-1 combiner unit (shown in FIGs. 4 and 5), and finally sent to 64 feed sources on 4 antenna array planes. Each feed source may be subjected to gain adjustment. The gain adjustment points are named *Ka*₁₁*, Ka*₁₂, ... *Kaₙₘ*, where n=4, representing the number of array plane channels; and m=64, representing the number feed sources in pairs of elements on each array plane. A schematic diagram of a single antenna array plane is as shown in FIG 4, and the position of Ka is as shown in FIG 10. Each feed source is branched to 2 antenna elements, the 1st element on the array plane serves as a reference element, and a coupling element is placed beside the reference element to serve as a feedback coupling point of the transmitting power of the reference element. Each of the 4 antenna array planes has a coupling element, a coupling signal of which is coupled and combined via the corresponding antenna array plane, as shown in FIG 4. Then, the signal enters the antenna correction receiving channel to move a radio frequency signal to the baseband, as shown in FIG 8. Finally, detection of the feedback RSSI power is completed at the baseband.

In order to detect the element power at the antenna port accurately, the gain characteristic of the transmitting link and the feedback coupling link needs to be firstly obtained.

The transmitting link is further split into a link gain from the baseband to the reference element on the antenna array plane, and a link gain from the baseband to other elements on the antenna array plane. Here, a link gain test from the baseband to the reference element on the antenna array plane in the transmitting link is described first. The gain characteristic includes a channel gain test at normal temperature and a characteristic test of gain changes in high and low temperature environments. For the case of two link channels, 4 gain characteristic parameter files under normal temperature and varying temperatures are given. The normal temperature gain file of the transmitting channel is TxGain.txt, and the normal temperature gain file of the feedback coupling link is RxGain.txt. Test information contained in the normal temperature gain file includes a channel index, a test frequency point index, a temperature sensor value during test and gain test values under different sweep frequency points in different channels. The temperature-varying gain compensation file of the transmitting channel is TxTempGain.txt, and the temperature-varying gain compensation file of the feedback coupling link is RxTempGain.txt. Test information contained in the temperature-varying gain compensation file includes a channel index, a test frequency point index, a temperature sensor step index and gain compensation values for different temperature step indexes of the temperature sensor at various frequency points in various channels. The compensation values are gain deviation values between different temperatures and a reference temperature under the normal temperature.

Since the link channels of the reference element and other elements on the array plane after the multi-stage combiner unit cannot be guaranteed to be completely consistent, gains of the links input to the array plane from the multi-stage combiner unit and output from the elements thereon need to be tested respectively. Gains of 64 channels on each array plane need to be tested, and thus in total gains of 256 channels on 4 array planes need to be tested. A relative gain difference is obtained by comparing the gain of each element channel with the gain of the reference element channel, and finally, the compensation gain is written into the file TxKaGain.txt to be used for gain adjustment of each element feed source.

The AAU power control includes three steps: 1. arranging parameters of the gain adjustment points for the 4 array plane channels and 256 element feed source channels in an open-loop manner so that the transmitting power of each element is substantially accurate; 2. mapping the forward TSSI and feedback coupling RSSI power detection to the antenna element; and 3. adjusting gains of the 4 array plane channels in a closed-loop manner according to the power detection values so that the antenna power precision and the tracking adjustment of channel gain changes are further improved.

At a 1st step, the open-loop gain setting specifically includes the following steps:
1) Open-loop gain setting is performed on each array plane channel after AAU is started. A target gain of the transmitting channel is defined as a set theoretical desired gain from a TSSI power detection position to the antenna element position so that a gain value required to be set at an adjustable gain point Kr in the 4 array plane channels can be calculated from the target gain of the transmitting channel, the actual test gain and the temperature compensation gain. In order to simplify the description, the channel number is not indicated in the equation, and each antenna array plane channel can be calculated according to the following equation: ${G}_{txad} = {G}_{txtar} - \left({G}_{tx}+{G}_{txtemp}\right)$ where G_{txad} is a set value of an adjustable gain Kr of the transmitting channel before the multi-stage combiner unit, Gₜₓₜₐᵣ is a target gain of the transmitting channel, and Gₜₓ is a test gain of the array plane transmitting channel from a baseband to a reference antenna element. Since Gₜₓ is obtained from tests in a normal temperature environment, and Gₜₓₜₑₘₚ is a gain deviation value of the current temperature from the temperature of normal temperature test, the current temperature of the temperature sensor file and the temperature of the temperature sensor recorded during the Gₜₓ testing are inquired in the TxTempGain.txt to index a gain compensation value for the corresponding temperature so that a difference between the two gain compensation values can be calculated to obtain changed-gain compensation value between the two temperatures, and the test gain in the normal temperature can be corrected to obtain a gain estimation value under the current temperature.
2) Gain compensation settings are provided on the link branched out from the multi-stage combiner unit to the antenna element channel so that it is ensured that power of elements on each antenna array plane is aligned with power of the 1st element on the 1st antenna array plane. A gain input from the multi-stage combiner unit to the antenna element is named G_{bf}. The specific method includes: firstly subtracting, from a gain G_{bf11} of the 1st element on the 1st array plane of the array antenna, gains G_{bf12} ... G_{bf1m} (m=64) of other elements on the array plane, and writing the gain difference value into an element gain adjusting module between the multi-stage combiner unit of the array plane channel and the array antenna so that the gains among the elements on the array plane are consistent; and then subtracting, from the gain G_{bf11} of the 1st element on the 1st array plane of the array antenna, a gain G_{bf21}, G_{bf22} ... G_{bf2m} ... G_{bfnm} (n=4, m=64) of an element on other array planes and writing the gain difference value into the element gain adjusting module between the multi-stage combiner unit of the array plane channel and the array antenna so that finally the gains of the elements among the array planes are consistent. The method for realizing consistency in power among the elements on various array planes may further include selecting one element on each array plane as the reference, aligning other elements on the array plane to the gain of the reference element, then selecting one array plane as a reference plane, and compensating a difference value between the gain of the reference element of other array plane and the gain of the reference element on the reference plane to the adjustable gain of the array plane channel.

At a 2nd step, a mapping relationship between the baseband power detection values and the actual power values of the antenna elements in the forward and feedback links is obtained, and baseband TSSI power and RSSI power are detected to obtain the actual transmitting power of the corresponding element. The specific method includes the following steps:
1) An actual test gain from the reference antenna element on each antenna array plane to a baseband feedback power detection point H is obtained from a gain parameter Gᵣₓ prestored in AAU, a gain compensation value at the current temperature is obtained from a temperature compensation gain parameter Gᵣₓₜₑₘₚ prestored in AAU, and a gain of the power coupling channel of the current reference element is calculated. In order to simplify the description, the channel number is not indicated in the equation, and each antenna array plane channel can be calculated according to the following equation: G_{rxad} = Gᵣₓ + Gᵣₓₜₑₘₚ
   where G_{rxad} is a gain of the power coupling channel of the reference element at the current temperature, Gᵣₓ is an actual test gain of the power coupling channel, and Gᵣₓₜₑₘₚ is a temperature compensation value of the power coupling channel.
   An element transmitting power RSSI(dBm) at the antenna port may be calculated from the gain of the coupling channel at the current temperature by equation:$RSSI \left(dBm\right) = RSSI \left(dBFS\right) + {G}_{rxad}$ where RSSI(dBFS) is a relative power value between a baseband digital power detection value and a baseband full scale.
2) A desired gain of the transmitting link is obtained from a relationship between a rated power of the element on the array plane and a rated power of the baseband, and an actual transmitting power at the element position may be calculated from the desired gain and the current TSSI baseband detection power by equation: $TSSI \left(dBm\right) = TSSI \left(dBFS\right) + {G}_{txexp}$ where TSSI(dBFS) is a relative power value between a baseband digital power detection value and a baseband full scale, and Gₜₓₑₓₚ is a desired gain from the baseband to the element in the transmitting link.

At a 3rd step, closed-loop power detection and gain adjustment are performed. Time-sharing power control on power of the antenna channels in each subarray plane is performed in a closed-loop manner, and a baseband signal of the transmitting channel reaches elements on the antenna array plane via the transmitting channel. Each subarray antenna couples out signals through one of the reference elements, and the signals enter the baseband processing unit after passing through the combiner unit and the correction receiving channel. The gain of each array plane channel is adjusted by comparing the detection power TSSI of the forward baseband and the feedback detection power RSSI at the antenna port so that the transmitting power on the array plane is in consistence with the transmitting power of the baseband. Because n array plane channels multiplex one correction channel while the correction channel further needs to complete the antenna correction function, closed-loop power detection needs to be completed in turn at the position of a guard interval GP between receiving and transmitting slots in a data frame format. While the closed-loop power detection is performed on an array plane channel, other channels are in a waiting state. The closed-loop power detection of a single array plane channel includes two steps, i.e., transmitting a test signal and detecting TSSI and RSSI power, and gain adjustment of each channel is carried out after the closed-loop power detection of the array plane channel is finished. Since the antenna correction function is initiated at regular time, the acquisition of gains of the array plane channels and phase information are completed by using the antenna correction receiving channel in FIG 1 and by transmitting an AC sequence (antenna correction baseband data sequence) in the baseband of the transmitting channel at the position of interval GP between receiving and transmitting slots in the data frame format. Therefore, acquisition of the antenna correction data and acquisition of the closed-loop power detection data are conflicting, and channel resource occupation of the two operating modes of the correction channel are required to be scheduled in time. The specific operation steps of the closed-loop power control are as follows:
1) Two operating modes are set for the antenna correction channel, i.e., a power control mode and an antenna correction mode. Software starts the power control mode and the antenna correction mode at regular time, and the two modes will not be triggered at the same time.
2) In the power control mode, a group of wideband test signals are sent on the 1st antenna array plane channel for gain measurement of the transmitting channel. The wideband test signals are sent at the position of interval GP between receiving and transmitting slots to avoid the influence of uplink and downlink service signals on detection of the test signals.
3) A forward power detection signal TSSI and a feedback power signal RSSI coupled at the antenna port are acquired, and then the wideband test signals are closed.
4) Test signals are sequentially sent to all array plane channels in the manner as described in step 2), and step 3) is repeated until data acquisition of all array plane channels is finished.
5) A gain deviation value of the transmitting channel is obtained according to a power difference value between the forward power detection signal TSSI and the feedback signal RSSI of each channel, and the deviation value is compensated to a gain adjustment point on an intermediate radio frequency channel.
6) The operating mode of the antenna correction channel is switched to the antenna correction mode, and an antenna correction is initiated.
7) The above steps initiate the first cycle of closed-loop power control and antenna correction, and steps 2) to 6) are repeated when a system software timer triggers a next cycle of closed-loop power control and antenna correction, thereby forming the circulation.

### Optional embodiment 3:

The channel hardware device of the array antenna in the present application includes n*m paired element channels. In a traditional 5G base station, the multi-stage combiner unit in the hardware link can be removed so that n*1 paired element channels are formed. A traditional 5G base station may design a feedback coupling point at a power amplifier output position before each element, and enter the baseband through the coupling combiner and the correction receiving channel on the antenna array plane to complete the RSSI power detection. The modified hardware architecture can still implement power control by using the method of the present application. The specific implementation steps include:
testing to obtain gains and temperature compensation gains of n transmitting channel links;
testing to obtain, since n feedback coupling points are present, gains and temperature compensation gains of n correction receiving channel links;
setting a power mapping gain from the baseband TSSI to an element position to obtain the TSSI(dBm) power at the element position, and setting a power mapping gain from the element position to the baseband RSSI detection position according to the 2nd step to obtain RSSIx(dBm) power at each element position, where x represents the channel serial number, and x = 1, 2 ... n;
setting n paths of adjustable gains in an open-loop manner to enable the transmitting power of the element to approach the desired power; and
starting closed-loop power detection and control to complete adjustment of the n paths of gains.

### Optional embodiment 4:

In this embodiment of the present application, the setting of the transmitting channel gain incudes an open-loop process and a closed-loop process. The flow of the open-loop setting is as shown in FIG 11, in which the adjustable gain of the array plane channel is firstly set by setting a gain Kr of each subarray channel in an open-loop manner from the 1st antenna array plane channel (i.e., the subarray channel number i = 1); and then setting the adjustable gain of each channel array source on the array plane, i.e., setting a gain Ka of the array source channel in the subarray in an open-loop manner from the array source channel number j = 1, until settings of all the array plane channels and all the array source channels in each subarray are completed. In practical applications, it may determine whether the subarray channel number i is smaller than n, where n has a value equal to the number of array plane channels. When it is determined that the subarray channel number i is smaller than n, the subarray channel number i+1 is controlled, and the step of setting the gain of each subarray channel in an open-loop manner is repeated until it is determined that the subarray channel number i is not smaller than n. It may further determine whether the array source channel number j is smaller than m, where m has a value equal to the number of array source channels. When it is determined that the array source channel number j is smaller than m, the array source channel number j+1 is controlled, and the step of setting the gain of the array source channel in the subarray in an open-loop manner is repeated until it is determined that the array source channel number j is not smaller than m.

After the circulation, the open-loop setting of n*m paths of gain is completed. The flow of the closed-loop power control is as shown in FIG 9, in which when the timing for closed-loop power control is reached, the software system firstly selects a multiplexing mode of the correction receiving channel as the closed-loop power control mode, then selects the array plane channel 1 and opens an AC sequence (antenna correction sequence) signal source in the channel baseband position to obtain the TSSI 1/RSSI power at the baseband position, and closes the AC sequence signal source after the power is obtained. After the power information of all channels is acquired in sequence, a channel gain deviation is calculated, and finally gain adjustment is completed.

Since the amplitude-phase characteristic of the channel will be changed each time the gain of the transmitting channel is adjusted, and antenna correction needs to be carried out again, an initiation time of the first antenna correction is placed after the AAU is started and the first closed-loop gain adjustment is completed, and the antenna correction function is triggered by the closed-loop gain setting. When the closed-loop gain is converged and an external environment temperature does not change significantly, the gain of transmitting link channel in each element may be in a relatively stable state for a long time, and the closed-loop power adjustment will not be triggered for a long time. However, since beamforming of the antenna array plane is more sensitive to the phase characteristic than the gain characteristic of the array channel, this state cannot ensure that the phase characteristic of the channel also meets the requirements of beamforming, and therefore, the antenna correction needs to be initiated at regular time. Software needs to disable initiation of closed-loop power detection when antenna correction is performed, i.e., the two functions are mutually exclusive in time.

When a difference value in power between TSSI and RSSI obtained in the closed-loop power detection is too large and reaches an exception threshold value, it is considered that the system has an exception that may be a software operation exception, a transmitting channel exception or a feedback coupling channel exception. At this time, the closed loop may be stopped regardless of the causes, and an open-loop channel gain setting may be performed. When an exception occurs in the feedback channel, this method can protect the radio frequency power amplifier and stabilize the transmitting power.

### Optional embodiment 5:

In this embodiment of the present application, the gain of each pair of elements need to be set in an open-loop manner on the antenna subarray plane to ensure that gains of the elements on the subarray plane are consistent, and meanwhile, element gains among a plurality of array planes need to be aligned. Gain compensation settings are provided on the link input from the multi-stage combiner unit to the antenna element so that the element gains on different antenna array planes are aligned.

The gain alignment may be implemented by the following two manners: the first manner includes selecting one element on each array plane as the reference element, aligning other elements on each array plane with the reference element of the array plane by setting an adjustable gain of the element feed source, and then aligning gain difference values between the array planes through gain adjustment points on a digital processing link. The second manner includes selecting, from a plurality of array planes on AAU, one element on one array plane as the reference element, while regarding all the rest elements as non-reference elements, and calculating a gain difference value by comparing with the reference element to compensate a deviation value to the adjustable gain of the element feed source, and thus ensure that the element gains on different antenna array planes are aligned.

### Optional embodiment 6:

In this embodiment of the present application, the power coupling at the antenna port may be implemented by coupling from an antenna element, or by coupling from an antenna feed line connected with the element. Both manners can realize the closed-loop power control. As shown in FIG 12, coupling from an element position can facilitate reducing design complexity in layout of the antenna elements, but the gain flatness characteristic in the frequency band is relatively poor. Coupling from the antenna feed line results in a good gain flatness characteristic in the frequency band, but the wiring design is relative complex.

An embodiment of the present application further provides a storage medium including a program stored thereon, wherein the program, when executed, causes any one of the above methods to be implemented.

Optionally, in this embodiment, the storage medium may be configured to store a program code for performing the following steps:
At S1, receiving, by a designated package module among n package modules, a baseband signal sent from a baseband processing unit, and sending the received baseband signal to the baseband processing unit through an array plane coupling combiner unit and an antenna correction unit, where n is a positive integer, the baseband processing unit, the n package modules connected to the baseband processing unit, the array plane coupling combiner unit connected to each of the n package modules, and the antenna correction unit connected to the array plane coupling combiner unit are located in the array antenna, and each of the n package modules includes: a first gain adjustment unit, and an antenna array unit connected to the first gain adjustment unit.
At S2, comparing, by the baseband processing unit, a power test value of the received baseband signal with a power test value of a transmitting power of the baseband processing unit to determine a gain of the first gain adjustment unit in the designated package module according to the comparison result, and to indicate the gain to the first gain adjustment unit.
At S3, adjusting, by n first gain adjustment units and according to the gain, a gain of the first gain adjustment unit in the package module among the n package modules except the designated package module, so that n antenna array units of the n package modules have the same transmitting power.

Optionally, in this embodiment, the storage medium may include, but is not limited to: a U disk, a read-only memory (ROM), a random access memory (RAM), a mobile hard disk, a disk or optical disk, and other media that can store a program code.

Optionally, specific examples in the present embodiment may refer to the examples described in the foregoing embodiments and alternative implementations, which will not be repeated in the present embodiment.

Obviously, a person skilled in the art would understand that the above modules and steps in the embodiments of the present application can be realized by using a universal computing device, can be integrated in a single computing device or distributed on a network that consists of a plurality of computing devices,; and alternatively, they can be realized by using the executable program code of the computing device, so that they can be stored in a storage device and executed by the computing device, in some cases, can perform the shown or described steps in a sequence other than herein, or they are made into various integrated circuit modules respectively, or a plurality of modules or steps thereof are made into a single integrated circuit module, thus to be realized. Thus, the present application is not limited to any specific combination of hardware and software.

The above are merely embodiments of the present application, which are not intended to restrict the embodiments of the present disclosure. For those skilled in the art, the embodiments of the present application may have various changes and variations. The scope of protection is defined by the appended claims.

## Claims

1. An array antenna, comprising: a baseband processing unit (20), n package modules (22), an array plane coupling combiner unit (24) and an antenna correction unit (26), each of the n package modules (22) comprising: a first gain adjustment unit, and an antenna array unit connected to the first gain adjustment unit, wherein
a designated package module among the n package modules (22) is connected to the baseband processing unit (20) and the array plane coupling combiner unit (24), and is configured to, after receiving a baseband signal sent from the baseband processing unit (20), send, as a processed signal, the received baseband signal back to the baseband processing unit (20) through the array plane coupling combiner unit (24) and the antenna correction unit (26), where n is a positive integer and is greater than 1, and the antenna correction unit (26) comprises a common feedback coupling channel shared by the n package modules (22);
the baseband processing unit (20) is configured to compare a power test value of the processed signal with a power test value of a transmitting power of the baseband processing unit (20) to determine a gain of the first gain adjustment unit in the designated package module according to the comparison result, and to indicate the gain to the first gain adjustment unit; and
n first gain adjustment units are configured to adjust, according to the gain, gains of the n first gain adjustment units in the n package modules (22), so that n antenna array units of the n package modules (22) have the same transmitting power,
wherein each of the package modules (22) further comprises: m second gain adjustment units, and a multi-stage combiner unit which is connected to the m second gain adjustment units and configured to receive the baseband signal, split the baseband signal into m paths of signals, and send the m paths of signals to the antenna array unit through the m second gain adjustment units;
the antenna array unit is configured to send a k^{th} path of signal among the received m paths of signals, via a coupling element or an antenna feed line of the antenna array unit, to the baseband processing unit (20) through the array plane coupling combiner unit (24) and the antenna correction unit (26), wherein the k^{th} path of signal corresponds to a k^{th} second gain adjustment unit among the m second gain adjustment units;
the baseband processing unit (20) is configured to compare a power test value of the received k^{th} path of signal with the power test value of the transmitting power of the baseband processing unit (20), to determine a gain of the k^{th} path of signal according to the comparison result, and to indicate the gain of the k^{th} path of signal to the m second gain adjustment unit; and
the m second gain adjustment units are configured to adjust gains of the m paths of signals according to the gain of the k^{th} path of signal so that the m paths of signals have the same gain, where k is a positive integer and is smaller than or equal to m.

2. The array antenna according to claim 1, wherein the n first gain adjustment units are further configured to adjust, by the first gain adjustment unit of the designated package module, a gain of the antenna array unit corresponding to the first gain adjustment unit, and receive, by other first gain adjustment unit, a first gain difference value written by the baseband processing unit (20), and adjust a transmitting power of the antenna array unit corresponding to the other first gain adjustment unit according to the first gain difference value so that the antenna array units of the n package modules (22) have the same transmitting power,
wherein the other first gain adjustment unit refers to a first gain adjustment unit among the n first gain adjustment units except the first gain adjustment unit in the designated package module, and the first gain difference value refers to a difference value between the gain of the first gain adjustment unit in the designated package module and the gain of the other first gain adjustment unit.

3. The array antenna according to claim 1, wherein the m second gain adjustment units are further configured to adjust the gain of the k^{th} path of signal by the k^{th} second gain adjustment unit, and receive, by other second gain adjustment unit, a second gain difference value written by the baseband processing unit (20), and adjust a gain of the signal corresponding to the other second gain adjustment unit according to the second gain difference value so that the m paths of signals have the same gain,
wherein the other second gain adjustment unit refers to a second gain adjustment unit among the m second gain adjustment units except the second gain adjustment unit corresponding to the k^{th} path of signal, and the second gain difference value refers to a difference value between the gain of the second gain adjustment unit corresponding to the k^{th} path of signal and the gain of the other second gain adjustment unit.

4. The array antenna according to claim 1, wherein the baseband processing unit (20) is further configured to set an adjustable gain of the first gain adjustment unit according to at least the following equation: ${G}_{txad} = {G}_{txtar} - \left({G}_{tx}+{G}_{txtemp}\right)$ where G_{txad} is the adjustable gain, Gₜₓₜₐᵣ is a target gain for a transmitting channel between the baseband processing unit (20) and the antenna array unit, Gₜₓ is a test gain for the transmitting channel, and Gₜₓₜₑₘₚ is a gain deviation value of a temperature difference between a current temperature and a normal temperature.

5. A power adjustment method, comprising:
receiving (S302), by a designated package module among n package modules, a baseband signal sent from a baseband processing unit, and sending, as a processed signal, the received baseband signal back to the baseband processing unit through an array plane coupling combiner unit and an antenna correction unit, where n is a positive integer and is greater than 1, and the antenna correction unit comprises a common feedback coupling channel shared by the n package modules, the baseband processing unit, the n package modules connected to the baseband processing unit, the array plane coupling combiner unit connected to each of the n package modules, and the antenna correction unit connected to the array plane coupling combiner unit are located in the array antenna, and each of the n package modules comprises: a first gain adjustment unit, and an antenna array unit connected to the first gain adjustment unit;
comparing (S304), by the baseband processing unit, a power test value of the processed signal with a power test value of a transmitting power of the baseband processing unit to determine a gain of the first gain adjustment unit in the designated package module according to the comparison result, and to indicate the gain to the first gain adjustment unit; and
adjusting (S306), by n first gain adjustment units and according to the gain, gains of the n first gain adjustment units in the n package modules, so that n antenna array units of the n package modules have the same transmitting power,
wherein the step of receiving (S302), by the designated package module among the n package modules, the baseband signal sent from the baseband processing unit, comprises:
receiving, by a multi-stage combiner unit, the baseband signal, splitting the baseband signal into m paths of signals, and sending the m paths of signals to the antenna array unit through m second gain adjustment units, wherein each of the package modules further comprises: the m second gain adjustment units, and the multi-stage combiner unit connected to the m second gain adjustment units;
sending, by the antenna array unit, a k^{th} path of signal among the received m paths of signals, via a coupling element or an antenna feed line of the antenna array unit, to the baseband processing unit through the array plane coupling combiner unit and the antenna correction unit, wherein the k^{th} path of signal corresponds to a k^{th} second gain adjustment unit among the m second gain adjustment units; and
the method further comprises:
comparing, by the baseband processing unit, a power test value of the received k^{th} path of signal with the power test value of the transmitting power of the baseband processing unit, to determine a gain of the k^{th} path of signal according to the comparison result, and to indicate the gain of the k^{th} path of signal to the m second gain adjustment unit; and
adjusting, by the m second gain adjustment units, gains of the m paths of signals according to the gain of the k^{th} path of signal so that the m paths of signals have the same gain, where k is a positive integer and is smaller than or equal to m.

6. The power adjustment method according to claim 5, wherein the step of adjusting (S306), by the n first gain adjustment units and according to the gain, the gain of the first gain adjustment unit in the package module among the n package modules except the designated package module, so that the n antenna array units of the n package modules have the same transmitting power comprises:
adjusting, by the first gain adjustment unit of the designated package module, a gain of the antenna array unit corresponding to the first gain adjustment unit; and
receiving, by other first gain adjustment unit, a first gain difference value written by the baseband processing unit, and adjusting a transmitting power of the antenna array unit corresponding to the other first gain adjustment unit according to the first gain difference value so that the antenna array units of the n package modules have the same transmitting power,
wherein the other first gain adjustment unit refers to a first gain adjustment unit among the n first gain adjustment units except the first gain adjustment unit in the designated package module, and the first gain difference value refers to a difference value between the gain of the first gain adjustment unit in the designated package module and the gain of the other first gain adjustment unit.

7. The power adjustment method according to claim 5, wherein the step of adjusting, by the m second gain adjustment units, the gains of the m paths of signals according to the gain of the k^{th} path of signal so that the m paths of signals have the same gain comprises:
adjusting, by the k^{th} second gain adjustment unit, the gain of the k^{th} path of signal;
and
receiving, by other second gain adjustment unit, a second gain difference value written by the baseband processing unit, and adjusting a gain of the signal corresponding to the other second gain adjustment unit according to the second gain difference value so that the m paths of signals have the same gain,
wherein the other second gain adjustment unit refers to a second gain adjustment unit among the m second gain adjustment units except the second gain adjustment unit corresponding to the k^{th} path of signal, and the second gain difference value refers to a difference value between the gain of the second gain adjustment unit corresponding to the k^{th} path of signal and the gain of the other second gain adjustment unit.

8. The power adjustment method according to claim 5, wherein before the step of receiving (S302), by the designated package module among the n package modules, the baseband signal sent from the baseband processing unit, the method further comprises:
setting, by the baseband processing unit, an adjustable gain of the first gain adjustment unit according to at least the following equation:
G_{txad} = Gₜₓₜₐᵣ - (Gₜₓ + Gₜₓₜₑₘₚ)
where G_{txad} is the adjustable gain, Gₜₓₜₐᵣ is a target gain for a transmitting channel between the baseband processing unit and the antenna array unit, Gₜₓ is a test gain for the transmitting channel, and Gₜₓₜₑₘₚ is a gain deviation value of a temperature difference between a current temperature and a normal temperature.

9. A storage medium having a computer program stored thereon, wherein the computer program comprises instructions which, when the program is executed by a computer, cause the computer to carry out the method of any of claims 5 to 8.

## Patentansprüche

1. Eine Matrix-Antenne, umfassend: eine Basisband-Verarbeitungseinheit (20), n Paketmodule (22), eine Matrix-Ebene-Koppelung-Kombinierer-Einheit (24) und eine Antenne-Korrektur-Einheit (26), wobei jedes der n Paketmodule (22) umfasst: eine erste Verstärkung-Anpassung-Einheit, und eine Antenne-Matrix-Einheit, die mit der ersten Verstärkung-Anpassung-Einheit verbunden ist, wobei
ein bestimmtes Paketmodul unter den n Paketmodulen (22) mit der Basisband-Verarbeitungseinheit (20) und der Matrix-Ebene-Koppelung-Kombinierer-Einheit (24) verbunden ist, und konfiguriert ist, um, nach Empfangen eines Basisband-Signals, das von der Basisband-Verarbeitungseinheit (20) gesendet wird, als ein verarbeitetes Signal, das empfangene Basisband-Signal zurück zu der Basisband-Verarbeitungseinheit (20) durch die Matrix-Ebene-Koppelung-Kombinierer-Einheit (24) und die Antenne-Korrektur-Einheit (26) zu senden, wobei n eine positive Ganzzahl ist und größer als 1 ist, und die Antenne-Korrektur-Einheit (26) einen gemeinsamen Rückmeldung-Koppelung-Kanal umfasst, der von den n Paketmodulen (22) gemeinsam genutzt wird;
die Basisband-Verarbeitungseinheit (20) konfiguriert ist, um einen Leistungs-Testwert des verarbeiteten Signals mit einem Leistungs-Testwert einer Übertragungsleistung der Basisband-Verarbeitungseinheit (20) zu vergleichen, um eine Verstärkung der ersten Verstärkung-Anpassung-Einheit in dem bestimmten Paketmodul gemäß dem Vergleichsergebnis zu bestimmen, und um die Verstärkung der ersten Verstärkung-Anpassung-Einheit anzugeben; und
n erste Verstärkung-Anpassung-Einheiten konfiguriert sind, um, gemäß der Verstärkung, Verstärkungen der n ersten Verstärkung-Anpassung-Einheiten in den n Paketmodulen (22) anzupassen, so dass n Antenne-Matrix-Einheiten der n Paketmodule (22) die gleiche Übertragungsleistung aufweisen,
wobei jedes der Paketmodule (22) ferner umfasst: m zweite Verstärkung-Anpassung-Einheiten, und eine mehrstufige Kombinierer-Einheit, die mit den m zweiten Verstärkung-Anpassung-Einheiten verbunden ist und konfiguriert ist, um das Basisband-Signal zu empfangen, das Basisband-Signal in m Pfade von Signalen zu teilen, und die m Pfade von Signalen zu der Antenne-Matrix-Einheit durch die m zweiten Verstärkung-Anpassung-Einheiten zu senden;
die Antenne-Matrix-Einheit konfiguriert ist, um einen k-ten Pfad von Signal unter den empfangenen m Pfaden von Signalen, über ein Kopplungselement oder eine Antenneneinspeisungsleitung der Antenne-Matrix-Einheit, zu der Basisband-Verarbeitungseinheit (20) durch die Matrix-Ebene-Koppelung-Kombinierer-Einheit (24) und die Antenne-Korrektur-Einheit (26) zu senden, wobei der k-te Pfad von Signal einer k-ten zweiten Verstärkung-Anpassung-Einheit unter den m zweiten Verstärkung-Anpassung-Einheiten entspricht;
die Basisband-Verarbeitungseinheit (20) konfiguriert ist, um einen Leistungs-Testwert des empfangenen k-ten Pfads von Signal mit dem Leistungs-Testwert der Übertragungsleistung der Basisband-Verarbeitungseinheit (20) zu vergleichen, um eine Verstärkung des k-ten Pfads von Signal gemäß dem Vergleichsergebnis zu bestimmen, und um die Verstärkung des k-ten Pfads von Signal der m zweiten Verstärkung-Anpassung-Einheit anzugeben; und
die m zweiten Verstärkung-Anpassung-Einheiten konfiguriert sind, um Verstärkungen der m Pfade von Signalen gemäß der Verstärkung des k-ten Pfads von Signal anzupassen, so dass die m Pfade von Signalen die gleiche Verstärkung aufweisen, wobei k eine positive Ganzzahl ist und kleiner als oder gleich m ist.

2. Die Matrix-Antenne gemäß Anspruch 1, wobei die n ersten Verstärkung-Anpassung-Einheiten ferner konfiguriert sind, um, durch die erste Verstärkung-Anpassung-Einheit des bestimmten Paketmoduls, eine Verstärkung der Antenne-Matrix-Einheit entsprechend der ersten Verstärkung-Anpassung-Einheit anzupassen, und um, durch eine andere erste Verstärkung-Anpassung-Einheit, einen ersten Verstärkung-Differenzwert zu empfangen, der durch die Basisband-Verarbeitungseinheit (20) geschrieben wird, und um eine Übertragungsleistung der Antenne-Matrix-Einheit entsprechend der anderen ersten Verstärkung-Anpassung-Einheit gemäß dem ersten Verstärkung-Differenzwert anzupassen, so dass die Antenne-Matrix-Einheiten der n Paketmodule (22) die gleiche Übertragungsleistung aufweisen,
wobei die andere erste Verstärkung-Anpassung-Einheit sich auf eine erste Verstärkung-Anpassung-Einheit unter den n ersten Verstärkung-Anpassung-Einheiten mit Ausnahme der ersten Verstärkung-Anpassung-Einheit in dem bestimmten Paketmodul bezieht, und der erste Verstärkung-Differenzwert sich auf einen Differenzwert zwischen der Verstärkung der ersten Verstärkung-Anpassung-Einheit in dem bestimmten Paketmodul und der Verstärkung der anderen ersten Verstärkung-Anpassung-Einheit bezieht.

3. Die Matrix-Antenne gemäß Anspruch 1, wobei die m zweiten Verstärkung-Anpassung-Einheiten ferner konfiguriert sind, um die Verstärkung des k-ten Pfads von Signal durch die k-te zweite Verstärkung-Anpassung-Einheit anzupassen, und um, durch eine andere zweite Verstärkung-Anpassung-Einheit, einen zweiten Verstärkung-Differenzwert zu empfangen, der durch die Basisband-Verarbeitungseinheit (20) geschrieben wird, und um eine Verstärkung des Signals entsprechend der anderen zweiten Verstärkung-Anpassung-Einheit gemäß dem zweiten Verstärkung-Differenzwert anzupassen, so dass die m Pfade von Signalen die gleiche Verstärkung aufweisen,
wobei die andere zweite Verstärkung-Anpassung-Einheit sich auf eine zweite Verstärkung-Anpassung-Einheit unter den m zweiten Verstärkung-Anpassung-Einheiten mit Ausnahme der zweiten Verstärkung-Anpassung-Einheit entsprechend dem k-ten Pfad von Signal bezieht, und der zweite Verstärkung-Differenzwert sich auf einen Differenzwert zwischen der Verstärkung der zweiten Verstärkung-Anpassung-Einheit entsprechend dem k-ten Pfad von Signal und der Verstärkung der anderen zweiten Verstärkung-Anpassung-Einheit bezieht.

4. Die Matrix-Antenne gemäß Anspruch 1, wobei die Basisband-Verarbeitungseinheit (20) ferner konfiguriert ist, um eine anpassbare Verstärkung der ersten Verstärkung-Anpassung-Einheit gemäß zumindest der folgenden Gleichung einzustellen: ${G}_{txad} = {G}_{txtar} - \left({G}_{tx}+{G}_{txtemp}\right)$ wobei G_{txad} die anpassbare Verstärkung ist, Gₜₓₜₐᵣ eine Zielverstärkung für einen Übertragungskanal zwischen der Basisband-Verarbeitungseinheit (20) und der Antenne-Matrix-Einheit ist, Gₜₓ eine Testverstärkung für den Übertragungskanal ist, und Gₜₓₜₑₘₚ ein Verstärkung-Abweichung-Wert einer Temperaturdifferenz zwischen einer aktuellen Temperatur und einer normalen Temperatur ist.

5. Ein Leistung-Anpassung-Verfahren, umfassend:
Empfangen (S302), durch ein bestimmtes Paketmodul unter n Paketmodulen, eines Basisband-Signals, das von einer Basisband-Verarbeitungseinheit gesendet wird, und Senden, als ein verarbeitetes Signal, des empfangenen Basisband-Signals zurück zu der Basisband-Verarbeitungseinheit durch eine Matrix-Ebene-Koppelung-Kombinierer-Einheit und eine Antenne-Korrektur-Einheit, wobei n eine positive Ganzzahl ist und größer als 1 ist, und die Antenne-Korrektur-Einheit einen gemeinsamen Rückmeldung-Koppelung-Kanal umfasst, der von den n Paketmodulen gemeinsam genutzt wird, die Basisband-Verarbeitungseinheit, die n Paketmodule, die mit der Basisband-Verarbeitungseinheit verbunden sind, die Matrix-Ebene-Koppelung-Kombinierer-Einheit, die mit jedem der n Paketmodule verbunden ist, und die Antenne-Korrektur-Einheit, die mit der Matrix-Ebene-Koppelung-Kombinierer-Einheit verbunden ist, in der Matrix-Antenne angeordnet sind, und jedes der n Paketmodule umfasst: eine erste Verstärkung-Anpassung-Einheit, und eine Antenne-Matrix-Einheit, die mit der ersten Verstärkung-Anpassung-Einheit verbunden ist;
Vergleichen (S304), durch die Basisband-Verarbeitungseinheit, eines Leistungs-Testwerts des verarbeiteten Signals mit einem Leistungs-Testwert einer Übertragungsleistung der Basisband-Verarbeitungseinheit, um eine Verstärkung der ersten Verstärkung-Anpassung-Einheit in dem bestimmten Paketmodul gemäß dem Vergleichsergebnis zu bestimmen, und um die Verstärkung der ersten Verstärkung-Anpassung-Einheit anzugeben; und
Anpassen (S306), durch n erste Verstärkung-Anpassung-Einheiten und gemäß der Verstärkung, von Verstärkungen der n ersten Verstärkung-Anpassung-Einheiten in den n Paketmodulen, so dass n Antenne-Matrix-Einheiten der n Paketmodule die gleiche Übertragungsleistung aufweisen,
wobei der Schritt des Empfangens (S302), durch das bestimmte Paketmodul unter den n Paketmodulen, des Basisband-Signals, das von der Basisband-Verarbeitungseinheit gesendet wird, umfasst:
Empfangen, durch eine mehrstufige Kombinierer-Einheit, des Basisband-Signals, Teilen des Basisband-Signals in m Pfade von Signalen, und Senden der m Pfade von Signalen zu der Antenne-Matrix-Einheit durch m zweite Verstärkung-Anpassung-Einheiten, wobei jedes der Paketmodule ferner umfasst: die m zweiten Verstärkung-Anpassung-Einheiten, und die mehrstufige Kombinierer-Einheit, die mit den m zweiten Verstärkung-Anpassung-Einheiten verbunden ist;
Senden, durch die Antenne-Matrix-Einheit, eines k-ten Pfads von Signal unter den empfangenen m Pfaden von Signalen, über ein Kopplungselement oder eine Antenneneinspeisungsleitung der Antenne-Matrix-Einheit, zu der Basisband-Verarbeitungseinheit durch die Matrix-Ebene-Koppelung-Kombinierer-Einheit und die Antenne-Korrektur-Einheit, wobei der k-te Pfad von Signal einer k-ten zweiten Verstärkung-Anpassung-Einheit unter den m zweiten Verstärkung-Anpassung-Einheiten entspricht; und
das Verfahren ferner umfasst:
Vergleichen, durch die Basisband-Verarbeitungseinheit, eines Leistungs-Testwerts des empfangenen k-ten Pfads von Signal mit dem Leistungs-Testwert der Übertragungsleistung der Basisband-Verarbeitungseinheit, um eine Verstärkung des k-ten Pfads von Signal gemäß dem Vergleichsergebnis zu bestimmen, und um die Verstärkung des k-ten Pfads von Signal der m zweiten Verstärkung-Anpassung-Einheit anzugeben; und
Anpassen, durch die m zweiten Verstärkung-Anpassung-Einheiten, von Verstärkungen der m Pfade von Signalen gemäß der Verstärkung des k-ten Pfads von Signal, so dass die m Pfade von Signalen die gleiche Verstärkung aufweisen, wobei k eine positive Ganzzahl ist und kleiner als oder gleich m ist.

6. Das Leistung-Anpassung-Verfahren gemäß Anspruch 5, wobei der Schritt des Anpassens (S306), durch die n ersten Verstärkung-Anpassung-Einheiten und gemäß der Verstärkung, der Verstärkung der ersten Verstärkung-Anpassung-Einheit in dem Paketmodul unter den n Paketmodulen mit Ausnahme des bestimmten Paketmoduls, so dass die n Antenne-Matrix-Einheiten der n Paketmodule die gleiche Übertragungsleistung aufweisen, umfasst:
Anpassen, durch die erste Verstärkung-Anpassung-Einheit des bestimmten Paketmoduls, einer Verstärkung der Antenne-Matrix-Einheit, die der ersten Verstärkung-Anpassung-Einheit entspricht; und
Empfangen, durch eine andere erste Verstärkung-Anpassung-Einheit, eines ersten Verstärkung-Differenzwerts, der durch die Basisband-Verarbeitungseinheit geschrieben wird, und Anpassen einer Übertragungsleistung der Antenne-Matrix-Einheit entsprechend der anderen ersten Verstärkung-Anpassung-Einheit gemäß dem ersten Verstärkung-Differenzwert, so dass die Antenne-Matrix-Einheiten der n Paketmodule die gleiche Übertragungsleistung aufweisen,
wobei die andere erste Verstärkung-Anpassung-Einheit sich auf eine erste Verstärkung-Anpassung-Einheit unter den n ersten Verstärkung-Anpassung-Einheiten mit Ausnahme der ersten Verstärkung-Anpassung-Einheit in dem bestimmten Paketmodul bezieht, und der erste Verstärkung-Differenzwert sich auf einen Differenzwert zwischen der Verstärkung der ersten Verstärkung-Anpassung-Einheit in dem bestimmten Paketmodul und der Verstärkung der anderen ersten Verstärkung-Anpassung-Einheit bezieht.

7. Das Leistung-Anpassung-Verfahren gemäß Anspruch 5, wobei der Schritt des Anpassens, durch die m zweiten Verstärkung-Anpassung-Einheiten, der Verstärkungen der m Pfade von Signalen gemäß der Verstärkung des k-ten Pfads von Signal, so dass die m Pfade von Signalen die gleiche Verstärkung aufweisen, umfasst:
Anpassen, durch die k-te zweite Verstärkung-Anpassung-Einheit, der Verstärkung des k-ten Pfads von Signal; und
Empfangen, durch eine andere zweite Verstärkung-Anpassung-Einheit, eines zweiten Verstärkung-Differenzwerts, der durch die Basisband-Verarbeitungseinheit geschrieben wird, und Anpassen einer Verstärkung des Signals entsprechend der anderen zweiten Verstärkung-Anpassung-Einheit gemäß dem zweiten Verstärkung-Differenzwert, so dass die m Pfade von Signalen die gleiche Verstärkung aufweisen,
wobei die andere zweite Verstärkung-Anpassung-Einheit sich auf eine zweite Verstärkung-Anpassung-Einheit unter den m zweiten Verstärkung-Anpassung-Einheiten mit Ausnahme der zweiten Verstärkung-Anpassung-Einheit entsprechend dem k-ten Pfad von Signal bezieht, und der zweite Verstärkung-Differenzwert sich auf einen Differenzwert zwischen der Verstärkung der zweiten Verstärkung-Anpassung-Einheit entsprechend dem k-ten Pfad von Signal und der Verstärkung der anderen zweiten Verstärkung-Anpassung-Einheit bezieht.

8. Das Leistung-Anpassung-Verfahren gemäß Anspruch 5, wobei vor dem Schritt des Empfangens (S302), durch das bestimmte Paketmodul unter den n Paketmodulen, des Basisband-Signals, das von der Basisband-Verarbeitungseinheit gesendet wird, das Verfahren ferner umfasst:
Einstellen, durch die Basisband-Verarbeitungseinheit, einer anpassbaren Verstärkung der ersten Verstärkung-Anpassung-Einheit gemäß zumindest der folgenden Gleichung: ${G}_{txad} = {G}_{txtar} - \left({G}_{tx}+{G}_{txtemp}\right)$
wobei G_{txad} die anpassbare Verstärkung ist, Gₜₓₜₐᵣ eine Zielverstärkung für einen Übertragungskanal zwischen der Basisband-Verarbeitungseinheit und der Antenne-Matrix-Einheit ist, Gₜₓ eine Testverstärkung für den Übertragungskanal ist, und Gₜₓₜₑₘₚ ein Verstärkung-Abweichung-Wert einer Temperaturdifferenz zwischen einer aktuellen Temperatur und einer normalen Temperatur ist.

9. Ein Speichermedium mit einem darauf gespeicherten Computerprogramm, wobei das Computerprogramm Anweisungen umfasst, die, wenn das Programm durch einen Computer ausgeführt wird, den Computer veranlassen, das Verfahren gemäß einem der Ansprüche 5 bis 8 auszuführen.

## Revendications

1. Antenne réseau, comprenant : une unité de traitement de bande de base (20), n modules de paquet (22), une unité de combinaison de couplage de plan de réseau (24) et une unité de correction d'antenne (26), chacun des n modules de paquet (22) comprenant : une première unité d'ajustement de gain, et une unité de réseau d'antennes connectée à la première unité d'ajustement de gain, dans laquelle
un module de paquet désigné parmi les n modules de paquet (22) est connecté à l'unité de traitement de bande de base (20) et à l'unité de combinaison de couplage de plan de réseau (24), et est configuré pour, après avoir reçu un signal de bande de base transmis à partir de l'unité de traitement de bande de base (20), transmettre, en tant que signal traité, le signal de bande de base reçu à l'unité de traitement de bande de base (20) par l'intermédiaire de l'unité de combinaison de couplage de plan de réseau (24) et de l'unité de correction d'antenne (26), où n est un entier positif et est supérieur à 1, et l'unité de correction d'antenne (26) comprend un canal de couplage de rétroaction commun partagé par les n modules de paquet (22) ;
l'unité de traitement de bande de base (20) est configurée pour comparer une valeur de test de puissance du signal traité avec une valeur de test de puissance d'une puissance de transmission de l'unité de traitement de bande de base (20) pour déterminer un gain de la première unité d'ajustement de gain dans le module de paquet désigné en fonction du résultat de comparaison, et pour indiquer le gain à la première unité d'ajustement de gain ; et
n premières unités d'ajustement de gain sont configurées pour ajuster, en fonction du gain, des gains des n premières unités d'ajustement de gain dans les n modules de paquet (22), de sorte que n unités de réseau d'antennes des n modules de paquet (22) ont la même puissance de transmission,
dans laquelle chacun des modules de paquet (22) comprend en outre : m secondes unités d'ajustement de gain, et une unité de combinaison à étapes multiples qui est connectée aux m secondes unités d'ajustement de gain et configurée pour recevoir le signal de bande de base, diviser le signal de bande de base en m trajets de signaux, et transmettre les m trajets de signaux à l'unité de réseau d'antennes par l'intermédiaire des m secondes unités d'ajustement de gain ;
l'unité de réseau d'antennes est configurée pour transmettre un k-ième trajet de signal parmi les m trajets de signaux reçus, par l'intermédiaire d'un élément de couplage ou d'une ligne d'alimentation d'antenne de l'unité de réseau d'antennes, à l'unité de traitement de bande de base (20) par l'intermédiaire de l'unité de combinaison de couplage de plan de réseau (24) et de l'unité de correction d'antenne (26), dans laquelle le k-ième trajet de signal correspond à une k-ième seconde unité d'ajustement de gain parmi les m secondes unités d'ajustement de gain ;
l'unité de traitement de bande de base (20) est configurée pour comparer une valeur de test de puissance du k-ième trajet de signal reçu avec la valeur de test de puissance de la puissance de transmission de l'unité de traitement de bande de base (20), pour déterminer un gain du k-ième trajet de signal en fonction du résultat de comparaison, et pour indiquer le gain du k-ième trajet de signal à la m seconde unité d'ajustement de gain ; et
les m secondes unités d'ajustement de gain sont configurées pour ajuster des gains des m trajets de signaux en fonction du gain du k-ième trajet de signal de sorte que les m trajets de signaux ont le même gain, où k est un entier positif et est inférieur ou égal à m.

2. Antenne réseau selon la revendication 1, dans laquelle les n premières unités d'ajustement de gain sont en outre configurées pour ajuster, par la première unité d'ajustement de gain du module de paquet désigné, un gain de l'unité de réseau d'antennes correspondant à la première unité d'ajustement de gain, et recevoir, par une autre première unité d'ajustement de gain, une première valeur de différence de gain écrite par l'unité de traitement de bande de base (20), et ajuster une puissance de transmission de l'unité de réseau d'antennes correspondant à l'autre première unité d'ajustement de gain en fonction de la première valeur de différence de gain de sorte que les unités de réseau d'antennes des n modules de paquet (22) ont la même puissance de transmission,
dans laquelle l'autre première unité d'ajustement de gain se réfère à une première unité d'ajustement de gain parmi les n premières unités d'ajustement de gain à l'exception de la première unité d'ajustement de gain dans le module de paquet désigné, et la première valeur de différence de gain se réfère à une valeur de différence entre le gain de la première unité d'ajustement de gain dans le module de paquet désigné et le gain de l'autre première unité d'ajustement de gain.

3. Antenne réseau selon la revendication 1, dans laquelle les m secondes unités d'ajustement de gain sont en outre configurées pour ajuster le gain du k-ième trajet de signal par la k-ième seconde unité d'ajustement de gain, et recevoir, par une autre seconde unité d'ajustement de gain, une seconde valeur de différence de gain écrite par l'unité de traitement de bande de base (20), et ajuster un gain du signal correspondant à l'autre seconde unité d'ajustement de gain en fonction de la seconde valeur de différence de gain de sorte que les m trajets de signaux ont le même gain,
dans laquelle l'autre seconde unité d'ajustement de gain se réfère à une seconde unité d'ajustement de gain parmi les m secondes unités d'ajustement de gain à l'exception de la seconde unité d'ajustement de gain correspondant au k-ième trajet de signal, et la seconde valeur de différence de gain se réfère à une valeur de différence entre le gain de la seconde unité d'ajustement de gain correspondant au k-ième trajet de signal et le gain de l'autre seconde unité d'ajustement de gain.

4. Antenne réseau selon la revendication 1, dans laquelle l'unité de traitement de bande de base (20) est en outre configurée pour définir un gain ajustable de la première unité d'ajustement de gain en fonction d'au moins l'équation suivante : ${G}_{txad} = {G}_{txtar} - \left({G}_{tx}+{G}_{txtemp}\right)$ où G_{txad} est le gain ajustable, Gₜₓₜₐᵣ est un gain cible pour un canal de transmission entre l'unité de traitement de bande de base (20) et l'unité de réseau d'antennes, Gₜₓ est un gain de test pour le canal de transmission, et Gₜₓₜₑₘₚ est une valeur de déviation de gain d'une différence de température entre une température actuelle et une température normale.

5. Procédé d'ajustement de puissance, comprenant :
recevoir (S302), par un module de paquet désigné parmi n modules de paquet, un signal de bande de base transmis à partir d'une unité de traitement de bande de base, et transmettre, en tant que signal traité, le signal de bande de base reçu à l'unité de traitement de bande de base par l'intermédiaire d'une unité de combinaison de couplage de plan de réseau et d'une unité de correction d'antenne, où n est un entier positif et est supérieur à 1, et l'unité de correction d'antenne comprend un canal de couplage de rétroaction commun partagé par les n modules de paquet, l'unité de traitement de bande de base, les n modules de paquet connectés à l'unité de traitement de bande de base, l'unité de combinaison de couplage de plan de réseau connectée à chacun des n modules de paquet, et l'unité de correction d'antenne connectée à l'unité de combinaison de couplage de plan de réseau sont localisées dans l'antenne réseau, et chacun des n modules de paquet comprend : une première unité d'ajustement de gain, et une unité de réseau d'antennes connectée à la première unité d'ajustement de gain ;
comparer (S304), par l'unité de traitement de bande de base, une valeur de test de puissance du signal traité avec une valeur de test de puissance d'une puissance de transmission de l'unité de traitement de bande de base pour déterminer un gain de la première unité d'ajustement de gain dans le module de paquet désigné en fonction du résultat de comparaison, et pour indiquer le gain à la première unité d'ajustement de gain ; et
ajuster (S306), par n premières unités d'ajustement de gain et en fonction du gain, des gains des n premières unités d'ajustement de gain dans les n modules de paquet, de sorte que n unités de réseau d'antennes des n modules de paquet ont la même puissance de transmission,
dans lequel l'étape consistant à recevoir (S302), par le module de paquet désigné parmi les n modules de paquet, le signal de bande de base transmis à partir de l'unité de traitement de bande de base, comprend :
recevoir, par une unité de combinaison à étapes multiples, le signal de bande de base, diviser le signal de bande de base en m trajets de signaux, et transmettre les m trajets de signaux à l'unité de réseau d'antennes par l'intermédiaire de m secondes unités d'ajustement de gain, dans lequel chacun des modules de paquet comprend en outre : les m secondes unités d'ajustement de gain, et l'unité de combinaison à étapes multiples connectée aux m secondes unités d'ajustement de gain ;
transmettre, par l'unité de réseau d'antennes, un k-ième trajet de signal parmi les m trajets de signaux reçus, par l'intermédiaire d'un élément de couplage ou d'une ligne d'alimentation d'antenne de l'unité de réseau d'antennes, à l'unité de traitement de bande de base par l'intermédiaire de l'unité de combinaison de couplage de plan de réseau et de l'unité de correction d'antenne, dans lequel le k-ième trajet de signal correspond à une k-ième seconde unité d'ajustement de gain parmi les m secondes unités d'ajustement de gain ; et
le procédé comprend en outre :
comparer, par l'unité de traitement de bande de base, une valeur de test de puissance du k-ième trajet de signal reçu avec la valeur de test de puissance de la puissance de transmission de l'unité de traitement de bande de base, pour déterminer un gain du k-ième trajet de signal en fonction du résultat de comparaison, et pour indiquer le gain du k-ième trajet de signal à la m seconde unité d'ajustement de gain ; et
ajuster, par les m secondes unités d'ajustement de gain, des gains des m trajets de signaux en fonction du gain du k-ième trajet de signal de sorte que les m trajets de signaux ont le même gain, où k est un entier positif et est inférieur ou égal à m.

6. Procédé d'ajustement de puissance selon la revendication 5, dans lequel l'étape consistant à ajuster (S306), par les n premières unités d'ajustement de gain et en fonction du gain, le gain de la première unité d'ajustement de gain dans le module de paquet parmi les n modules de paquet à l'exception du module de paquet désigné, de sorte que les n unités de réseau d'antennes des n modules de paquet ont la même puissance de transmission, comprend :
ajuster, par la première unité d'ajustement de gain du module de paquet désigné, un gain de l'unité de réseau d'antennes correspondant à la première unité d'ajustement de gain ; et
recevoir, par une autre première unité d'ajustement de gain, une première valeur de différence de gain écrite par l'unité de traitement de bande de base, et ajuster une puissance de transmission de l'unité de réseau d'antennes correspondant à l'autre première unité d'ajustement de gain en fonction de la première valeur de différence de gain de sorte que les unités de réseau d'antennes des n modules de paquet ont la même puissance de transmission,
dans laquelle l'autre première unité d'ajustement de gain se réfère à une première unité d'ajustement de gain parmi les n premières unités d'ajustement de gain à l'exception de la première unité d'ajustement de gain dans le module de paquet désigné, et la première valeur de différence de gain se réfère à une valeur de différence entre le gain de la première unité d'ajustement de gain dans le module de paquet désigné et le gain de l'autre première unité d'ajustement de gain.

7. Procédé d'ajustement de puissance selon la revendication 5, dans lequel l'étape consistant à ajuster, par les m secondes unités d'ajustement de gain, les gains des m trajets de signaux en fonction du gain du k-ième trajet de signal de sorte que les m trajets de signaux ont le même gain, comprend :
ajuster, par la k-ième seconde unité d'ajustement de gain, le gain du k-ième trajet de signal ; et
recevoir, par une autre seconde unité d'ajustement de gain, une seconde valeur de différence de gain écrite par l'unité de traitement de bande de base, et ajuster un gain du signal correspondant à l'autre seconde unité d'ajustement de gain en fonction de la seconde valeur de différence de gain de sorte que les m trajets de signaux ont le même gain,
dans laquelle l'autre seconde unité d'ajustement de gain se réfère à une seconde unité d'ajustement de gain parmi les m secondes unités d'ajustement de gain à l'exception de la seconde unité d'ajustement de gain correspondant au k-ième trajet de signal, et la seconde valeur de différence de gain se réfère à une valeur de différence entre le gain de la seconde unité d'ajustement de gain correspondant au k-ième trajet de signal et le gain de l'autre seconde unité d'ajustement de gain.

8. Procédé d'ajustement de puissance selon la revendication 5, dans lequel avant l'étape consistant à recevoir (S302), par le module de paquet désigné parmi les n modules de paquet, le signal de bande de base transmis à partir de l'unité de traitement de bande de base, le procédé comprend en outre :
définir, par l'unité de traitement de bande de base, un gain ajustable de la première unité d'ajustement de gain en fonction d'au moins l'équation suivante : ${G}_{txad} = {G}_{txtar} - \left({G}_{tx}+{G}_{txtemp}\right)$
où G_{txad} est le gain ajustable, Gₜₓₜₐᵣ est un gain cible pour un canal de transmission entre l'unité de traitement de bande de base et l'unité de réseau d'antennes, Gₜₓ est un gain de test pour le canal de transmission, et Gₜₓₜₑₘₚ est une valeur de déviation de gain d'une différence de température entre une température actuelle et une température normale.

9. Moyen de stockage sur lequel est stocké un programme informatique, dans lequel le programme informatique comprend des instructions qui, lorsque le programme est exécuté par un ordinateur, amènent l'ordinateur à réaliser le procédé selon l'une quelconque des revendications 5 à 8.
